# EUROPÄISCHE PATENTSCHRIFT

(11) **EP 3 427 327 B1**
(45) Veröffentlichungstag und Bekanntmachung des Hinweises auf die Patenterteilung: **25.03.2020**
(21) Anmeldenummer: 17708521.4
(22) Anmeldetag: 03.03.2017
(51) Int. Cl.: H01M 12/08, H01M 10/39

(54) **VORRICHTUNG ZUR SPEICHERUNG VON ELEKTRISCHER ENERGIE UND VERFAHREN ZUM BETRIEB DER VORRICHTUNG**
DEVICE FOR STORING ELECTRICAL ENERGY AND METHOD FOR OPERATING THE DEVICE
DISPOSITIF DE STOCKAGE D'ENERGIE ELECTRIQUE ET PROCEDE DE FONCTIONNEMENT DU DISPOSITIF

(30) Priorität: 08.03.2016 EP 16159091
(43) Veröffentlichungstag der Anmeldung: 16.01.2019
(73) Patentinhaber: BASF SE, 67056 Ludwigshafen am Rhein (DE)
(72) Erfinder: HEIDEBRECHT, Peter, 67056 Ludwigshafen (DE); BAYER, Domnik, 67056 Ludwigshafen (DE); JABCZYNSKI, Wolfgang, 67056 Ludwigshafen (DE); ZERPA UNDA, Jesus Enrique, 67056 Ludwigshafen (DE); DUERR, Anna Katharina, 67056 Ludwigshafen (DE)
(74) Vertreter: BASF IP Association
(86) Internationale Anmeldenummer: PCT/EP2017/055067
(87) Internationale Veröffentlichungsnummer: WO 2017/153292

(56) Entgegenhaltungen:
- WO-A1-2010/112466
- JP-A- 2002 184 456
- US-A- 4 086 393
- US-A- 4 728 587

## Beschreibung

Die Erfindung geht aus von einer Vorrichtung zur Speicherung von elektrischer Energie, umfassend mindestens eine elektrochemische Zelle mit einem Anodenraum und einem Kathodenraum, die durch einen Festelektrolyten getrennt sind, sowie einen ersten Speicher für Anodenmaterial, der mit dem Anodenraum verbunden ist und einen zweiten Speicher für Kathodenmaterial, der mit dem Kathodenraum verbunden ist. Die Erfindung betrifft weiterhin ein Verfahren zum Betrieb der Vorrichtung zur Speicherung elektrischer Energie.

Elektrochemische Zellen, die zur Speicherung elektrischer Energie eingesetzt werden, werden im Allgemeinen als Batterie oder Akkumulator bezeichnet. Andere elektrochemische Vorrichtungen sind zum Beispiel Elektrolysezellen. Diese können beispielsweise zur Herstellung von Alkalimetallen aus geeignete Alkalimetalle enthaltenden Salzen eingesetzt werden.

Neben Batterien, die bei Umgebungstemperatur arbeiten, gibt es auch solche, die eine Betriebstemperatur oberhalb der Umgebungstemperatur erfordern. Hierbei handelt es sich im Allgemeinen um elektrochemische Zellen, die mit schmelzflüssigen Elektrolyten arbeiten, wobei die Schmelztemperatur mindestens eines Elektrolyten oberhalb der Umgebungstemperatur liegt. Entsprechende Batterien sind zum Beispiel solche auf Basis von Alkalimetall und Schwefel, wobei sowohl Schwefel als auch Alkalimetall in geschmolzenem Zustand eingesetzt werden.

Entsprechende Batterien, die auf Basis eines geschmolzenen Alkalimetalls als Anode und eines kathodischen Reaktionsteilnehmers, im Allgemeinen Schwefel, arbeiten, sind zum Beispiel aus DE-A 26 35 900, WO2010/112466 oder DE-A 26 10 222 bekannt. Hierbei werden das geschmolzene Alkalimetall und der kathodische Reaktionsteilnehmer durch einen für Kationen durchlässigen Festelektrolyten getrennt. An der Kathode erfolgt eine Reaktion des Alkalimetalls mit dem kathodischen Reaktionsteilnehmer. Dies ist zum Beispiel bei Einsatz von Natrium als Alkalimetall und Schwefel als kathodischem Reaktionsteilnehmer die Reaktion von Natrium und Schwefel zu Natriumpolysulfid. Zum Laden der Batterie wird das Natriumpolysulfid an der Elektrode durch Aufbringen elektrischer Energie wieder in Natrium und Schwefel getrennt.

Zur Vergrößerung der Speicherfähigkeit von Batterien auf Basis eines geschmolzenen Alkalimetalls und eines kathodischen Reaktionsteilnehmers werden Batterien eingesetzt, bei denen durch zusätzliche Vorratsbehälter die Menge der eingesetzten Reaktanden vergrößert wird. Zum Entladen wird das flüssige Natrium dem Festelektrolyten zugeführt. Das flüssige Natrium dient gleichzeitig als Anode und bildet Kationen, die durch den kationenleitenden Festelektrolyten zur Kathode transportiert werden. An der Kathode wird der an die Kathode anströmende Schwefel zu Polysulfid reduziert, also mit den Natriumionen zu Natriumpolysulfid umgesetzt.

Das entsprechende Natriumpolysulfid kann in einem weiteren Behälter gesammelt werden. Alternativ ist es auch möglich, das Natriumpolysulfid mit dem Schwefel gemeinsam im Behälter um den Kathodenraum zu sammeln. Aufgrund des Dichteunterschiedes steigt der Schwefel auf und setzt sich das Natriumpolysulfid ab. Diese Dichtedifferenz kann auch dazu genutzt werden, eine Strömung entlang der Kathode zu bewirken. Ein entsprechendes Batteriedesign ist zum Beispiel in WO 2011/161072 beschrieben.

Aus DE-A 10 2011 110 843 ist eine Batterie auf Basis von geschmolzenem Natrium und geschmolzenem Schwefel bekannt, bei der separate Speicher für Natrium, Schwefel und Natriumpolysulfid vorgesehen sind und im Betrieb die jeweils benötigten Stoffe durch die Zellen der Batterie strömen. An der Natriumleitung und an der Polysulfidleitung sind die Elektroden zur Stromentnahme angeordnet.

In der WO-A 2010/135283 ist eine weitere Natrium-Schwefel-Batterie beschrieben, bei der zur Vergrößerung der Reichweite separate Behälter für Natrium und Schwefel eingesetzt werden. Hierbei werden Natrium und Schwefel jeweils mit Hilfe von Pumpen durch die jeweiligen Elektrolyträume einer elektrochemischen Zelle geleitet. Hierdurch ergibt sich eine kontinuierliche Strömung, so dass das Natriumpolysulfid, welches sich auf der Schwefelseite bildet, kontinuierlich aus dem Elektrolytraum ausgetragen wird.

Da alle elektrochemischen Reaktanden schmelzflüssig vorliegen und der optimale Leitfähigkeitsbereich der ionenleitenden keramischen Membran erst bei höheren Temperaturen erreicht wird, liegt die Betriebstemperatur einer solchen Batterie üblicherweise in einem Bereich von 300°C bis 370°C. Die maximale Temperatur ergibt sich dabei im Allgemeinen aus der Degradation der als Festelektrolyt eingesetzten Keramik.

Zur Temperierung der Zellen ist es beispielsweise aus JP-A 2010-212099 oder DE-A 40 29 901 bekannt, ein Temperiermedium einzusetzen, das die elektrochemischen Zellen umströmt.

Nachteil aller dieser Systeme ist jedoch, dass bei Verbindung mehrerer Zellen zu einer Batterie keine Wärme von den innenliegenden elektrochemischen Zellen nach außen abgeführt werden kann, wodurch die innenliegenden Zellen deutlich wärmer werden als die außen liegenden. Dies kann häufig zu einer Abschaltung oder Leistungsdrosselung im laufenden Betrieb erforderlich machen, was die Wirtschaftlichkeit der Batterie beeinträchtigt. Darüber hinaus ist das Aufwärmen und Abkühlen einer solchen Batterie, zum Beispiel zum Abstellen oder zur Wiederinbetriebnahme, nur mit sehr moderaten zeitlichen Temperaturgradienten und damit großem Zeitaufwand möglich.

Ein weiterer Nachteil der aus dem Stand der Technik bekannten Batterien ist es, dass zur Förderung des Schwefels und des Alkalimetalls Förderaggregate, in der Regel Pumpen, eingesetzt werden müssen, die in direktem Kontakt mit dem flüssigen Schwefel oder dem flüssigen Alkalimetall stehen. Dies führt zu hohen Korrosionsraten und damit zu häufigem Abschalten der Batterie infolge der notwendigen Wartungs- und Instandsetzungsarbeiten.

Aufgabe der vorliegenden Erfindung ist es daher, eine Vorrichtung zur Speicherung elektrischer Energie mit mindestens einer elektrochemischen Zelle sowie ein Verfahren zum Betrieb einer solchen Vorrichtung bereitzustellen, die die aus dem Stand der Technik bekannten Nachteile nicht aufweisen.

Gelöst wird die Aufgabe durch eine Vorrichtung zur Speicherung von elektrischer Energie, umfassend mindestens eine elektrochemische Zelle mit einem Anodenraum und einem Kathodenraum, die durch einen Festelektrolyten getrennt sind, sowie einen ersten Speicher für Anodenmaterial, der mit dem Anodenraum verbunden ist und einen zweiten Speicher für Kathodenmaterial, der mit dem Kathodenraum verbunden ist, wobei der Kathodenraum weiterhin mit einem dritten Speicher verbunden ist, der zweite Speicher und der dritte Speicher über eine Gasleitung miteinander verbunden sind, wobei die Gasleitung jeweils im oberen Bereich des zweiten und des dritten Speichers mündet und eine Fördervorrichtung für Gas mit umkehrbarer Förderrichtung in der Gasleitung aufgenommen ist, und wobei weiterhin
(i) der zweite Speicher eine Entnahmestelle im unteren Bereich des Speichers aufweist, die mit einer Leitung verbunden ist, die im oberen Bereich des Kathodenraums mündet und der dritte Speicher eine Entnahmestelle an der Oberfläche der im dritten Speicher enthaltenen Flüssigkeit aufweist, die mit einer Leitung verbunden ist, die im unteren Bereich des Kathodenraums mündet,
   oder
(ii) der zweite Speicher und der dritte Speicher jeweils eine Entnahmestelle im unteren Bereich des Speichers aufweisen, die mit einer Leitung verbunden sind, die im unteren Bereich des Kathodenraums mündet, und jeweils eine Entnahmestelle an der Oberfläche der im Speicher enthaltenen Flüssigkeit aufweisen, die mit einer Leitung verbunden sind, die im oberen Bereich des Kathodenraums mündet.

Durch den Einsatz des zweiten und des dritten Speichers, die mit der Gasleitung verbunden sind, ist es möglich, beim Entladen das Kathodenmaterial in den Kathodenraum und das im Kathodenraum entstehende Reaktionsprodukt aus dem Kathodenraum in den jeweiligen Speicher zu transportieren beziehungsweise beim Laden der Batterie das Reaktionsprodukt in den Kathodenraum und das im Kathodenraum entstehende Kathodenmaterial in die jeweiligen Speicher zu transportieren, ohne zusätzlich eine Pumpe einzusetzen, die mit dem Kathodenmaterial oder dem Reaktionsprodukt in Kontakt kommt. Hierdurch lassen sich insbesondere Betriebsunterbrechungen aufgrund von Wartungsarbeiten, die durch die Korrosion der Pumpen aufgrund des Kontakts mit Kathodenmaterial oder dem entstehenden Reaktionsprodukt erforderlich sind, vermeiden. Der Transport von Kathodenmaterial und Reaktionsprodukt durch den Kathodenraum erfolgt lediglich durch Schwerkraftunterstützung und einen Druckunterschied, der durch die Förderung des Gases aus einem Speicher in den anderen Speicher erzeugt wird.

In einer besonders bevorzugten Ausführungsform wird als Kathodenmaterial Schwefel und als Anodenmaterial ein Alkalimetall, insbesondere Natrium, eingesetzt. Das entstehende Reaktionsprodukt ist ein Alkalimetallpolysulfid, im Folgenden auch als Polysulfid bezeichnet.

Neben der Verwendung von Schwefel und Alkalimetall lassen sich die erfindungsgemäße Vorrichtung und das erfindungsgemäße Verfahren auch für andere Kathodenmaterialien und Anodenmaterialien einsetzen, solange Anodenmaterial, Kathodenmaterial und Reaktionsprodukt bei Betriebstemperatur flüssig sind und zudem Kathodenmaterial und Reaktionsprodukt zwei nicht mischbare Phasen unterschiedlicher Dichte bilden. Aus Gründen der Einfachheit werden sowohl die Vorrichtung als auch das Verfahren nachfolgend am Beispiel von Schwefel als Kathodenmaterial und Alkalimetall als Anodenmaterial beschrieben.

Eine Unterstützung des Transports von Schwefel beziehungsweise Alkalimetallpolysulfid durch den Kathodenraum mit Hilfe der Schwerkraft lässt sich zum Beispiel realisieren, wenn der zweite Speicher oberhalb der elektrochemischen Zelle und der dritte Speicher unterhalb der elektrochemischen Zelle positioniert ist. In diesem Fall kann der Schwefel allein schwerkraftgetrieben aus dem zweiten Speicher durch die elektrochemische Zelle in den dritten Speicher strömen. Da das Alkalimetallpolysulfid eine höhere Dichte hat als der Schwefel, sinkt das Alkalimetallpolysulfid bei der Bildung im Kathodenraum nach unten und kann so ebenfalls allein durch Schwerkraft entnommen und in den dritten Speicher eingeleitet werden.

Wenn die Strömungsgeschwindigkeit des Schwefels und Alkalimetallpolysulfids vom oberen zweiten Speicher durch den Kathodenraum in den unteren dritten Speicher erhöht werden soll, kann auch hier durch Einleitung von Gas in den zweiten Speicher und dem damit verbundenen Druckaufbau im zweiten Speicher der Transport des Schwefels unterstützt werden.

Ein weiterer Vorteil der Positionierung des zweiten Speichers oberhalb der elektrochemischen Zelle und des dritten Speichers unterhalb der elektrochemischen Zelle ist, dass eine kontinuierliche Entlüftung möglich ist. Eventuell im Kathodenraum oder in den Leitungen auftretende Gasblasen steigen nach oben in den zweiten Speicher und können somit den Transport des Schwefels in den Rohren nicht stören oder Teile der Elektrode blockieren.

Des Weiteren ist es möglich, durch Druckerhöhung, das heißt durch Einleitung von Gas in den oberen zweiten Speicher, die gesamte Flüssigkeit, das heißt Schwefel und Alkalimetallpolysulfid, sowohl aus dem zweiten Speicher als auch aus dem Kathodenraum der elektrochemischen Zelle in den dritten Speicher zu drücken, so dass auch die elektrochemische Zelle weitestgehend entleert ist. Hierdurch wird beim Abkühlen der Batterie auf eine Temperatur unterhalb der Erstarrungstemperatur des Schwefels beziehungsweise des Alkalimetallpolysulfids, zum Beispiel zu Revisionszwecken, die Gefahr eines Bruchs des Festelektrolyten deutlich vermindert. Auch ist ein gefahrloses Aufheizen beim Wiederinbetriebnehmen möglich, da das Aufheizen des Schwefels und des Polysulfids im unteren Speicher erfolgt und nur die leere Zelle aufgeheizt werden muss.

Da zum Laden der Batterie die Strömungsrichtung umgekehrt werden muss und das Alkalimetallpolysulfid in den Kathodenraum eingeleitet werden muss, ist es erforderlich, für diesen Betriebszustand das Gas in den dritten Speicher einzuleiten, so dass aufgrund des erhöhten Drucks das Alkalimetallpolysulfid in den Kathodenraum eingeleitet wird und der Schwefel oben aus dem Kathodenraum entnommen werden kann. Hierzu ist die Fördervorrichtung für Gas mit umkehrbarer Förderrichtung notwendig.

Als Fördervorrichtung für das Gas mit umkehrbarer Förderrichtung kann zum Beispiel eine Kompressoreinheit mit umkehrbarer Strömungsrichtung eingesetzt werden. Durch Einsatz einer entsprechenden Kompressoreinheit kann in Verbindung mit entsprechenden Absperrvorrichtungen, insbesondere Ventilen oder Hähnen, Gas entweder aus dem zweiten in den dritten Speicher oder in entgegengesetzter Richtung aus dem dritten in den zweiten Speicher gefördert werden. Hierdurch wird jeweils der Druck in dem Speicher erhöht, in den das Gas gefördert wird, und der Druck im anderen Speicher, aus dem das Gas entnommen wird, verringert. Alternativ zu einer Kompressoreinheit mit umkehrbarer Strömungsrichtung kann die umkehrbare Förderrichtung jedoch auch auf jede beliebige andere Weise, die dem Fachmann bekannt ist, realisiert werden. So ist es zum Beispiel möglich, zwei parallele Leitungen vorzusehen, die jeweils eine Fördervorrichtung aufweisen, wobei eine Fördervorrichtung in die eine und die zweite Fördervorrichtung in die entgegengesetzte Richtung fördert und das Gas mittels Ventilen jeweils abhängig von der gewünschten Richtung durch eine der beiden Leitungen zu fördern. Als Fördervorrichtung kann dabei jede beliebe Vorrichtung, mit der ein Gastransport realisiert werden kann, eingesetzt werden. Übliche Fördervorrichtungen sind Kompressoren.

Um zu vermeiden, dass Schwefel in den zur Gasförderung eingesetzten Kompressoren kondensiert, ist in einer bevorzugten Ausführungsform zwischen dem zweiten Speicher und der Fördervorrichtung für Gas und/oder zwischen dem dritten Speicher und der Fördervorrichtung für Gas ein Kondensatabscheider positioniert. Der Kondensatabscheider arbeitet vorzugsweise bei einer Temperatur, bei der im Gas enthaltener Schwefel auskondensiert und abgeschieden werden kann. Die Abscheidung des im Gas enthaltenen Schwefels ist insbesondere dann notwendig, wenn die Fördervorrichtung für das Gas bei einer Temperatur betrieben wird, die unterhalb der Kondensationstemperatur des Schwefels liegt. In diesem Fall kann im Gas enthaltener Schwefel in der Fördervorrichtung auskondensieren und zu Schädigungen, insbesondere durch Korrosion, führen. Damit kein Schwefel in die Fördervorrichtung gelangt, ist der Kondensatabscheider vorzugsweise in Strömungsrichtung des Gases vor der Fördervorrichtung positioniert.

Die zur Abscheidung des Schwefels gewünschte niedrigere Temperatur kann einerseits durch Kühlung des Kondensatabscheiders erzielt werden, alternativ ist es jedoch auch möglich, den Kondensatabscheider an einem Ort zu platzieren, an dem die Temperatur niedriger ist als die Betriebstemperatur der Batterie. Ein solcher Ort ist beispielsweise außerhalb der für den Betrieb der Batterie notwendigen Isolierung.

Alternativ oder zusätzlich zu einem Kondensatabscheider ist es auch möglich, zwischen dem zweiten Speicher und der Fördervorrichtung für das Gas und zwischen dem dritten Speicher und der Fördervorrichtung für das Gas einen Balgen vorzusehen. Durch den Einsatz der Balgen ist es möglich, das durch die Fördervorrichtung transportierte Gas vollständig von der jeweils im zweiten und dritten Speicher enthaltenen Gasatmosphäre zu entkoppeln.

Da nicht verhindert werden kann, dass zumindest in einem Teil der für den Gastransport eingesetzten Leitungen Schwefel oder Polysulfid enthalten sind und sowohl Schwefel als auch Polysulfid korrosiv wirken, ist es bevorzugt, die Leitungen mit einem geeigneten Korrosionsschutz zu versehen. Hierzu ist es zum Beispiel möglich, die Leitungen zu chromieren.

In einer Ausführungsform der Erfindung weisen der zweite Speicher und der dritte Speicher jeweils eine Entnahmestelle im unteren Bereich des Speichers auf, die mit einer Leitung verbunden sind, die im unteren Bereich des Kathodenraums mündet, und jeweils eine Entnahmestelle an der Oberfläche der im Speicher enthaltenen Flüssigkeit, die mit einer Leitung verbunden sind, die im oberen Bereich des Kathodenraums mündet, und der zweite und dritte Speicher sind so miteinander verbunden, dass Flüssigkeit aus dem zweiten Speicher direkt in den dritten Speicher geleitet werden kann. Diese Verbindung des zweiten und dritten Speichers erlaubt es, beim Laden der Batterie nicht umgesetztes Polysulfid, beziehungsweise beim Entladen der Batterie nicht umgesetzten Schwefel direkt wieder in den Speicher zurückzuführen, aus dem das Polysulfid beziehungsweise der Schwefel in den Kathodenraum eingeleitet wird, um einen kontinuierlichen Betrieb der Batterie zu ermöglichen, bis der gesamte Schwefel oder das gesamte Polysulfid umgesetzt sind oder ein vorgegebener Umsatz beziehungsweise eine vorgegebene Betriebsdauer erzielt worden sind. Wenn eine entsprechende Leitung, durch die Schwefel oder Polysulfid direkt vom zweiten in den dritten Speicher oder vom dritten in den zweiten Speicher gefördert werden können, nicht vorgesehen ist, ist es notwendig, nach Entleerung des zweiten oder dritten Speichers das nicht umgesetzte Polysulfid oder den nicht umgesetzten Schwefel durch den Kathodenraum zurückzuführen. Eine Unterbrechung des Ladebetriebs oder des Entladebetriebs wird dadurch nicht erforderlich, da weiterhin Polysulfid während des Ladens und Schwefel während des Entladens im Kathodenraum verfügbar ist.

Der erfindungsgemäße Aufbau der Vorrichtung zur Speicherung elektrischer Energie ermöglicht es, die elektrochemischen Zellen durch ausreichend hohe Strömungsgeschwindigkeit des Schwefels beziehungsweise des Polysulfids durch den Kathodenraum zu temperieren. Für eine geeignete Temperaturführung ist es hierbei vorteilhaft, wenn der zweite Speicher und der dritte Speicher jeweils eine Vorrichtung zur Temperaturregelung umfassen. Mit der Vorrichtung zur Temperaturregelung kann die Temperatur im zweiten und dritten Speicher auf einen Sollwert geregelt werden. Hierdurch ist es zum Beispiel möglich, Wärme, die der Schwefel oder das Polysulfid beim Durchströmen des Kathodenraums aufgenommen oder abgegeben hat, mittels der Vorrichtung zur Temperaturregelung anschließend im Speicher abzuführen oder zuzuführen, so dass der Schwefel und/oder das Polysulfid im zweiten oder im dritten Speicher, vorzugsweise im zweiten und dritten Speicher auf einer vorgegebenen Solltemperatur gehalten werden kann. Als Vorrichtung zur Temperaturregelung eignet sich jede beliebige, dem Fachmann bekannte Vorrichtung. So ist es zum Beispiel möglich, einen Temperatursensor zur Erfassung der Temperatur und eine geeignete Heizeinheit und eine geeignete Kühleinheit oder alternativ eine kombinierte Heiz- und Kühleinheit vorzusehen. Zum Heizen oder Kühlen können zum Beispiel von einem Temperiermedium durchströmte Rohrleitungen im Speicher oder alternativ ein von einem Temperiermedium durchströmter Doppelmantel des Speichers vorgesehen sein. Alternativ können insbesondere zum Heizen auch elektrische Heizelemente eingesetzt werden. Da die Vorrichtung zur Speicherung elektrischer Energie bei erhöhter Temperatur betrieben wird, könnte eine Kühlung auch durch Wärmeabgabe an die Umgebung realisiert werden.

Die Anzahl der elektrochemischen Zellen, die jeweils mit einem zweiten Speicher und einem dritten Speicher verbunden sind, kann beliebig groß gewählt werden. So kann gegebenenfalls nur eine elektrochemische Zelle vorgesehen sein, es ist jedoch auch möglich, bis zu mehreren tausend elektrochemischen Zellen vorzusehen. Die Anzahl der elektrochemischen Zellen ist hierbei abhängig von der gewünschten elektrischen Leistung der Vorrichtung zur Speicherung elektrischer Energie. Die einzelnen Zellen können dabei in Reihe oder parallel elektrisch miteinander verbunden sein. Auch ist es möglich, jeweils mehrere elektrochemische Zellen in Reihe zu schalten und mehrere dieser Reihen parallel oder mehrere elektrochemische Zellen parallel zu Modulen verbinden und die jeweils parallel geschalteten Module in Reihe.

Um die Temperatur der einzelnen elektrochemischen Zellen einer Vorrichtung zur Speicherung elektrischer Energie, bei der als Anodenmaterial geschmolzenes Alkalimetall und als Kathodenmaterial Schwefel eingesetzt wird, einstellen zu können, wird die Vorrichtung vorzugsweise gemäß einem Verfahren mit folgenden Schritten betrieben:
(a) Durchströmen des Kathodenraums mit Alkalimetallpolysulfid zum Laden der Vorrichtung zur Speicherung elektrischer Energie oder mit Schwefel zum Entladen der Vorrichtung zur Speicherung elektrischer Energie, wobei das Alkalimetallpolysulfid aus dem dritten Speicher von unten in den Kathodenraum eingeleitet wird, den Kathodenraum von unten nach oben durchströmt, wobei ein Teil des Alkalimetallpolysulfids zu Schwefel umgesetzt wird und das Alkalimetallpolysulfid und der Schwefel oben aus dem Kathodenraum entnommen und in den zweiten Speicher eingeleitet werden, oder der Schwefel aus dem zweiten Speicher von oben in den Kathodenraum eingeleitet wird, den Kathodenraum von oben nach unten durchströmt, wobei ein Teil des Schwefels zu Alkalimetallpolysulfid umgesetzt wird und der Schwefel und das Alkalimetallpolysulfid am unteren Bereich des Kathodenraums entnommen und in den dritten Speicher eingeleitet werden,
(b) Umkehr der Strömungsrichtung und Zurückleiten des Alkalimetallpolysulfids aus dem zweiten Speicher in den dritten Speicher beim Ladeprozess und Zurückleiten des Schwefels aus dem dritten Speicher in den zweiten Speicher beim Entladeprozess,
(c) Wiederholen der Schritte (a) und (b).

Durch das Einleiten des Alkalimetallsulfids von unten in den Kathodenraum und die Entnahme des beim Durchströmen des Kathodenraums gebildeten Schwefels sowie des nicht umgesetzten Alkalimetallpolysulfids oben aus dem Kathodenraum beziehungsweise das Einleiten des Schwefels oben in den Kathodenraum und die Entnahme des im Kathodenraum gebildeten Alkalimetallpolysulfids sowie des nicht umgesetzten Schwefels unten aus dem Kathodenraum wird unterstützend der Dichteunterschied zwischen Schwefel und Alkalimetallpolysulfid genutzt. Das Alkalimetallpolysulfid hat eine größere Dichte als der Schwefel und sinkt damit nach unten ab und beim Laden der Vorrichtung entstehender Schwefel hat eine geringere Dichte und steigt damit auf. Da die Entnahme beim Entladen unten erfolgt und beim Laden oben wird im Entladeprozess insbesondere auch das Alkalimetallpolysulfid aus dem Kathodenraum entfernt, so dass dieses nicht die weitere Reaktion an der Elektrode blockiert. Das Verfahren erlaubt es, dass beim Entladen immer frischer Schwefel zugeführt wird und an die Elektrode strömt. Entsprechend wird beim Laden der Vorrichtung insbesondere auch der entstehende Schwefel aus dem Kathodenraum entfernt, so dass nachgeführtes Alkalimetallpolysulfid mit der Elektrode in Kontakt kommt und zu Alkalimetall, das durch den Festelektrolyten geleitet wird, und Schwefel umgesetzt wird. Diese Strömungsführung ermöglicht im Unterschied zu den aus dem Stand der Technik bekannten Batterien auf Basis von Alkalimetall und Schwefel den Einsatz einer einfachen, flachen Elektrode, da diese keine Speicherfunktion aufweisen muss. Des Weiteren braucht auch der Raum um die Elektrode nur so groß zu sein, dass keine Tropfen hängen bleiben. Auch hier ist kein zusätzliches Speichervolumen erforderlich. Da der Kathodenraum keine Speicherfunktion hat und zudem die Elektrode flach und ohne Speicherfunktion gestaltet werden kann, ist es möglich, bei gleichem Volumen der Vorrichtung zur Speicherung elektrischer Energie eine größere Anzahl an Zellen unterzubringen als bei den aus dem Stand der Technik bekannten Zellgestaltungen.

Wenn der zweite Speicher und der dritte Speicher so miteinander verbunden sind, dass Flüssigkeit direkt aus dem zweiten Speicher in den dritten Speicher geleitet werden kann oder umgekehrt Flüssigkeit aus dem dritten Speicher direkt in den zweiten Speicher, ist es möglich, vor Durchführung des Schrittes (b) die entsprechende Verbindung zu öffnen, so dass bei einer Umkehr der Strömungsrichtung das Alkalimetallpolysulfid beziehungsweise der Schwefel über die direkte Verbindung in den anderen Speicher geleitet werden. Wenn eine entsprechende Leitung nicht vorgesehen ist, ist es jedoch auch möglich, nach Umkehr der Strömungsrichtung das Alkalimetallpolysulfid beziehungsweise den Schwefel durch den Kathodenraum in den jeweils anderen Speicher zurückzuführen, wobei in diesem Fall der Betrieb der Vorrichtung zur Speicherung elektrischer Energie, das heißt entweder das Laden oder das Entladen so lange weitergeführt werden kann, bis das im Kathodenraum vorhandene Polysulfid während des Ladens oder der im Kathodenraum vorhandene Schwefel während des Entladens an der Elektrode umgesetzt worden ist.

Um die Unterbrechung im Ladebetrieb oder im Entladebetrieb zu vermeiden, wenn in Schritt (b) das Alkalimetall beziehungsweise der Schwefel zurückgeleitet wird, ist es bevorzugt, wenn jeweils vor Durchführung des Schrittes (a) beim Laden der Vorrichtung der Schwefel aus dem dritten Speicher durch den Kathodenraum in den zweiten Speicher und beim Entladen der Vorrichtung das Alkalimetallpolysulfid aus dem zweiten Speicher durch den Kathodenraum in den dritten Speicher jeweils mit einer Geschwindigkeit geleitet werden, die höher ist als die Geschwindigkeit mit der das Alkalimetallpolysulfid während des Ladens und der Schwefel während des Entladens durch den Kathodenraum geleitet werden.

Das vorstehend beschriebene Verfahren, bei dem beim Entladen der Schwefel zurück in den zweiten Speicher oder beim Laden das Alkalimetall zurück in den dritten Speicher gefördert wird, eignet sich insbesondere bei einem Aufbau der Vorrichtung zur Speicherung elektrischer Energie, bei der der zweite Speicher oberhalb der elektrochemischen Zelle und der dritte Speicher unterhalb der elektrochemischen Zelle positioniert ist. Dieser Aufbau hat den zusätzlichen Vorteil, dass die elektrochemische Zelle auch bei Energieausfall allein aufgrund der Schwerkraft vollständig entleert werden kann, so dass kein Material um den Festelektrolyten herum erstarren und so zu Schädigungen des Festelektrolyten oder der Elektrode führen kann.

Wenn als zweiter und dritter Speicher jeweils solche eingesetzt werden, bei denen Entnahmestellen sowohl für Schwefel als auch für Polysulfid vorgesehen sind, wobei die Entnahme für Schwefel zum Beispiel mit einem Schwimmer, der auf der Flüssigkeitsoberfläche aufliegt, realisiert werden kann und die Entnahmestelle für Polysulfid an der Unterseite des Speichers, ist es möglich, sowohl zum Laden als auch zum Entladen das Polysulfid oder alternativ den Schwefel zunächst vom zweiten Speicher in den dritten Speicher zu leiten und sobald ein vorgegebener Zustand erreicht wurde, in umgekehrter Richtung vom dritten in den zweiten Speicher. Das entsprechende Verfahren umfasst dann folgende Schritte:
(i) Durchströmen des Kathodenraums mit Alkalimetallpolysulfid zum Laden der Vorrichtung zur Speicherung elektrischer Energie oder mit Schwefel zum Entladen der Vorrichtung zur Speicherung elektrischer Energie, wobei das Alkalimetallpolysulfid oder der Schwefel aus dem zweiten Speicher in den dritten Speicher strömt und wobei beim Durchströmen durch den Kathodenraum beim Entladen ein Teil des Schwefels zu Alkalimetallpolysulfid umgesetzt wird und beim Laden ein Teil des Alkalimetallpolysulfids zu Schwefel, so dass nach dem Durchströmen des Kathodenraums im dritten Speicher eine obere flüssige Phase aus Schwefel und eine untere flüssige Phase aus Alkalimetallpolysulfid enthalten ist;
(ii) Umkehr der Strömungsrichtung, nachdem zumindest ein Teil des Schwefels oder zumindest ein Teil des Alkalimetallpolysulfids aus dem zweiten Speicher entnommen worden ist;
(iii) Durchströmen des Kathodenraums mit Alkalimetallpolysulfid zum Laden der Vorrichtung zur Speicherung elektrischer Energie oder mit Schwefel zum Entladen der Vorrichtung zur Speicherung elektrischer Energie, wobei das Alkalimetallpolysulfid oder der Schwefel aus dem dritten Speicher in den zweiten Speicher strömt und wobei beim Durchströmen durch den Kathodenraum beim Entladen ein Teil des Schwefels zu Alkalimetallpolysulfid umgesetzt wird und beim Laden ein Teil des Alkalimetallpolysulfids zu Schwefel, so dass nach dem Durchströmen des Kathodenraums im zweiten Speicher eine obere flüssige Phase aus Schwefel und eine untere flüssige Phase aus Alkalimetallpolysulfid enthalten ist, oder direktes Zurückleiten des Inhalts des dritten Speichers in den zweiten Speicher;
(iv) Umkehr der Strömungsrichtung, nachdem zumindest ein Teil des Schwefels oder ein Teil des Alkalimetallpolysulfids aus dem dritten Speicher entnommen worden ist;
(v) Wiederholen der Schritte (i) bis (iv),
wobei das Alkalimetallpolysulfid beim Laden so zugeführt wird, dass dieses von unten nach oben durch den Kathodenraum fließt und der Schwefel beim Entladen so zugeführt wird, dass dieser von oben nach unten durch den Kathodenraum fließt.

Der vorgegebene Zustand, bei dessen Erreichen die Förderrichtung umzukehren, ist zum Beispiel eine vorgegebene Menge oder eine vorgegebene Zeit, wobei die Menge oder Zeit beliebig gewählt werden können. Spätestens jedoch, wenn der gesamte Schwefel beziehungsweise das gesamte Polysulfid aus einem Speicher entnommen sind, muss die Förderrichtung umgekehrt werden.

Sowohl bei der Verfahrensvariante, bei der nach dem Durchströmen des Kathodenraums die Strömungsrichtung umgekehrt wird und der Inhalt des einen Speichers wieder in den anderen zurückgeleitet wird, wobei das Zurückleiten mit höherer Geschwindigkeit durch den Kathodenraum oder alternativ über eine separate Leitung erfolgt, als auch bei der Verfahrensvariante, bei der der Kathodenraum wechselweise vom zweiten in den dritten Speicher und vom dritten in den zweiten Speicher durchströmt wird, ist es möglich, durch den Einsatz separater Speicher sehr viel größere Mengen an Alkalimetall und Schwefel einzusetzen und so die Reichweite der Batterie zu erhöhen.

In einer möglichen Ausführungsform ist der dritte Speicher als Zwischenspeicher gestaltet und kann ein kleineres Volumen aufweisen als der zweite Speicher. Insbesondere in diesem Fall wird das vorstehend beschriebene Verfahren im Schritt (iii) so ausgeführt, dass nach Umkehr der Strömungsrichtung der Inhalt des dritten Speichers direkt zurückgeführt wird in den zweiten Speicher.

Sowohl das vorstehend beschriebene Verfahren mit den Schritten (a) bis (c) als auch das Verfahren mit den Schritten (i) bis (v) wird jeweils so betrieben, dass die Strömungsgeschwindigkeit durch den Kathodenraum beim Laden oder Entladen der Vorrichtung zur Speicherung elektrischer Energie so groß ist, dass nur ein Teil des zugeführten Schwefels oder des zugeführten Polysulfids umgesetzt wird. Das bedeutet, dass beim Laden das Polysulfid im Überschuss durch den Kathodenraum geleitet wird und beim Entladen der Schwefel. Vorzugsweise betragen der Überschuss an Polysulfid beim Laden und der Überschuss an Schwefel beim Entladen mindestens dem Eineinhalbfachen der stöchiometrisch benötigten Menge. Der maximale Überschuss an Polysulfid oder Schwefel ist vorzugsweise die Menge, die mit einer Druckdifferenz von 10 bar zwischen dem zweiten und dritten Speicher gefördert werden kann. Die maximale Menge, die transportiert wird, ergibt sich dabei auch aus der Gestaltung des Kathodenraums. Es ist notwendig, dass die für den Betrieb der elektrochemischen Zelle erforderliche Menge im Kathodenraum umgesetzt wird und zudem der Kathodenraum, insbesondere die darin aufgenommene Elektrode und der Festelektrolyt nicht durch die Strömung geschädigt werden.

Um zu vermeiden, dass Förderaggregate mit dem Schwefel oder dem Polysulfid in Kontakt kommen, ist es bevorzugt, wenn die Förderung des Schwefels oder des Alkalimetallpolysulfids durch Förderung des Gases aus dem Speicher, der befüllt wird, in den Speicher, der entleert wird, erfolgt. Da die Speicher ein konstantes Volumen aufweisen, enthalten diese immer zusätzlich zum Schwefel und/oder Polysulfid auch Gas. Das in den Speichern enthaltene Gas ist dabei vorzugsweise inert gegenüber den eingesetzten Materialien. Als Gas geeignet sind zum Beispiel Stickstoff, Helium, Argon oder andere, gegenüber Schwefel und Polysulfid inerte Gase.

Der Transport des Polysulfids oder des Schwefels erfolgt dabei, indem in den zu leerenden Speicher Gas eingeleitet wird, so dass sich in diesem der Druck erhöht. Das Gas wird dabei dem zu füllenden Speicher entnommen. Der Transport des Schwefels oder des Polysulfids erfolgt dadurch druckgesteuert, ohne dass ein Förderaggregat in den vom Schwefel und/oder Polysulfid durchströmten Leitungen vorgesehen sein muss. Es sind lediglich Kompressoren vorhanden, die das Gas von einem in den anderen Speicher fördern.

Da beim Laden der Vorrichtung Wärme aufgenommen wird und beim Entladen Wärme frei wird, ist es notwendig, die Zellen zu temperieren. Das erfindungsgemäße Verfahren erlaubt es dabei, die Zellen durch das Durchströmen des Kathodenraums mit dem Schwefel oder Polysulfid zu temperieren. Hierzu wird vorzugsweise die Strömungsgeschwindigkeit des Alkalimetallpolysulfids oder des Schwefels so eingestellt, dass der Betrag der Temperaturänderung des Alkalimetalls oder des Schwefels beim Durchströmen des Kathodenraums bei regulärem Betrieb der Zellen weniger als 40°C beträgt. Die von dem Schwefel oder Polysulfid aufgenommene oder abgegebene Wärme kann dann entsprechend im zweiten oder dritten Speicher abgeführt oder aufgenommen werden, indem der zweite und dritte Speicher temperaturgeregelt werden und bei einer Temperaturerhöhung entsprechend gekühlt und bei einer Temperaturabsenkung geheizt werden.

Nachfolgend wird die Erfindung anhand von in den Figuren dargestellten Ausführungsbeispielen näher erläutert.

Es zeigen:
- Figur 1: eine elektrochemische Zelle,
- Figur 2: eine Vorrichtung zur Speicherung elektrischer Energie in einer ersten Ausführungs-form,
- Figur 3: eine Vorrichtung zur Speicherung elektrischer Energie in einer zweiten Ausfüh-rungsform,
- Figur 4: eine Vorrichtung zur Speicherung elektrischer Energie in einer dritten Ausführungs-form,
- Figur 5: eine Vorrichtung zur Speicherung elektrischer Energie in einer vierten Ausführungs-form.

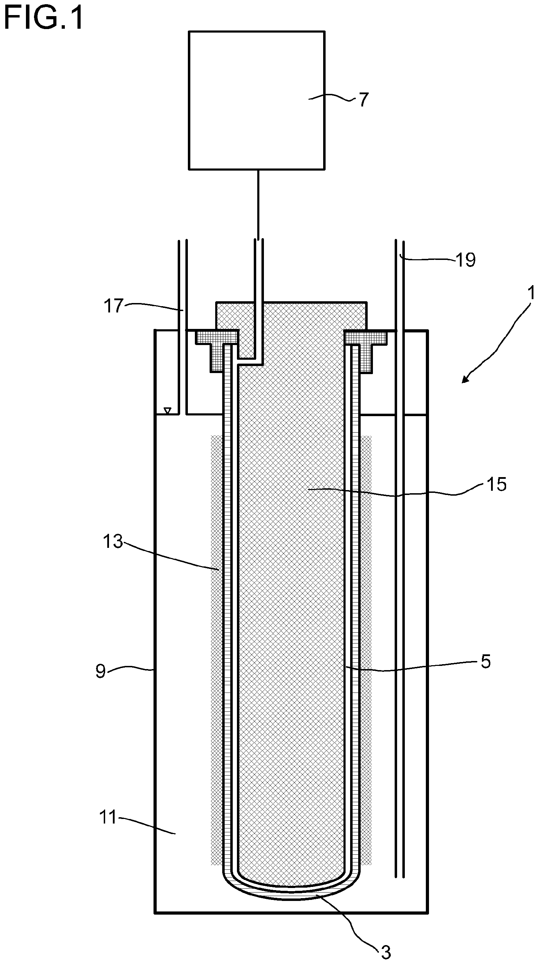

In Figur 1 ist eine elektrochemische Zelle dargestellt.

Eine elektrochemische Zelle 1 umfasst einen Festelektrolyten 3, der einen Anodenraum 5 umschließt. Der Anodenraum 5 ist im Betrieb der elektrochemischen Zelle 1 mit Anodenmaterial befüllt. Der vom Festelektrolyten 3 umschlossene Anodenraum 5 ist zur Vergrößerung der Kapazität der elektrochemischen Zelle 1 mit einem ersten Speicher 7 für Anodenmaterial verbunden.

Der Festelektrolyt 3 ist in einem Gehäuse 9 aufgenommen, wobei ein Kathodenraum 11 den Festelektrolyten 3 umschließt und vom Gehäuse 9 begrenzt wird. Der den Festelektrolyten 3 umschließende Kathodenraum 11 wird im Betrieb der elektrochemischen Zelle entweder von Kathodenmaterial oder von Reaktionsprodukt aus Kathodenmaterial mit Anodenmaterial durchströmt. Die Größe des den Festelektrolyten 3 umschließenden Kathodenraumes 11 wird dabei so gewählt, dass die gewünschte Kapazität der elektrochemischen Zelle 1 erreicht wird.

Um die Funktion der elektrochemischen Zelle 1 zu gewährleisten, ist der Festelektrolyt 3 von einer porösen Elektrode 13 umschlossen. Die elektrochemische Zelle 1 dient insbesondere als Speicher für elektrische Energie. Um die elektrische Energie zu gewinnen, reagiert das Anodenmaterial mit dem Kathodenmaterial. Diese Reaktion erfolgt in der porösen Elektrode 13. Damit die Reaktion stattfinden kann, ist es dabei notwendig, dass der Festelektrolyt für Ionen des Anodenmaterials, bevorzugt Alkalimetall-Ionen und insbesondere Natrium-Ionen, durchlässig ist. Das als Anodenmaterial eingesetzte Alkalimetall reagiert mit dem vorzugsweise als Kathodenmaterial verwendeten Schwefel unter Bildung von Alkalimetallpolysulfid, im Rahmen der vorliegenden Erfindung auch als Polysulfid bezeichnet.

Die elektrische Anbindung der elektrochemischen Zelle 1 erfolgt dabei, wie dem Fachmann bekannt ist, über hier nicht dargestellte Kollektoren, wobei ein Kollektor üblicherweise mit der porösen Elektrode 13 verbunden ist und ein zweiter Kollektor mit dem elektrisch leitenden Anodenmaterial.

In einer bevorzugten Ausführungsform ist in dem vom Festelektrolyten 3 umschlossenen Anodenraum 5 ein Verdränger 15 aufgenommen. Durch den Verdränger 15 wird das Volumen des Anodenraumes 5 reduziert. Dies hat eine Verbesserung der Betriebssicherheit der elektrochemischen Zelle 1 zur Folge, da der Anteil an Anodenmaterial, der im Falle eines Bruchs des Festelektrolyten unkontrolliert abreagieren kann, stark reduziert ist.

Der Verdränger 15 kann als massives Element oder als Hohlkörper ausgeführt sein. Wenn der Verdränger 15 als Hohlkörper gestaltet ist, besteht die Möglichkeit, diesen mit einem Temperiermedium zu durchströmen, um eine zusätzliche Temperierung der elektrochemischen Zelle zu erhalten.

Um die elektrochemische Zelle 1 betreiben zu können, sind eine erste Leitung 17 und eine zweite Leitung 19 umfasst, wobei die erste Leitung 17 oben im Kathodenraum 11 mündet und die zweite Leitung 19 unten. Beim Entladen wird Schwefel über die erste Leitung 17 zugeführt und entstehendes Alkalimetallpolysulfid sowie nicht umgesetzter Schwefel wird über die zweite Leitung 19 entnommen. Zum Laden wird die Strömungsrichtung umgekehrt, so dass in diesem Fall Alkalimetallpolysulfid über die zweite Leitung 19 zugeführt wird und im Kathodenraum 11 entstehender Schwefel sowie nicht umgesetztes Alkalimetallpolysulfid über die erste Leitung 17 entnommen wird.

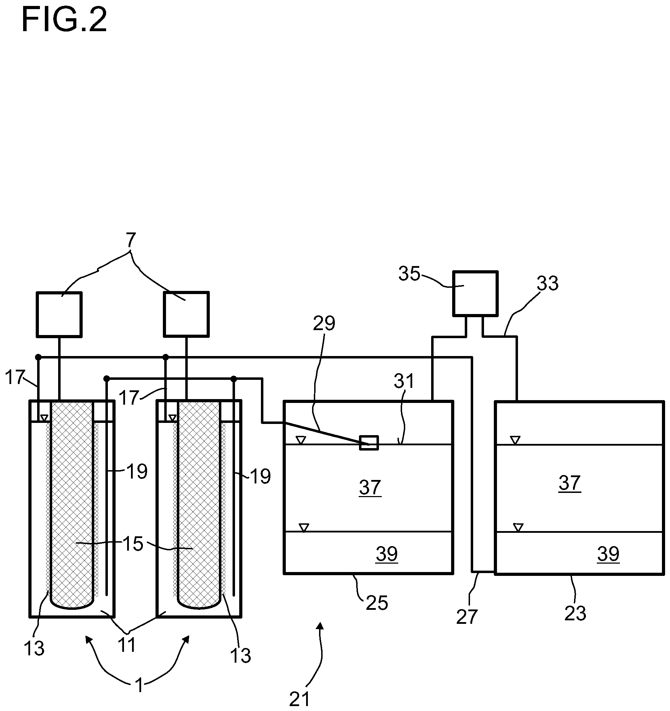

In Figur 2 ist eine Vorrichtung zur Speicherung elektrischer Energie in einer ersten Ausführungsform dargestellt.

Eine Vorrichtung zur Speicherung elektrischer Energie 21 umfasst im Allgemeinen mehrere elektrochemische Zellen 1. Hier sind beispielhaft zwei elektrochemische Zellen 1 dargestellt. Üblicherweise kann die Anzahl der elektrochemischen Zellen im Bereich von 1 bis zu mehreren hunderttausend liegen.

Um eine möglichst große Betriebsdauer der Vorrichtung zur Speicherung elektrischer Energie zu erhalten, sind ein zweiter Speicher 23 und ein dritter Speicher 25 umfasst. Der zweite Speicher 23 weist eine Entnahmestelle 27 im unteren Bereich auf, wobei die Entnahmestelle 27 mit der ersten Leitung 17 verbunden ist, die im oberen Bereich des Kathodenraums 11 mündet. Der dritte Speicher 25 weist eine Entnahmestelle 29 an der Oberfläche 31 der im dritten Speicher 25 enthaltenen Flüssigkeit auf. Die Entnahmestelle 29 ist mit der zweiten Leitung 19 verbunden, die im unteren Bereich des Kathodenraums 11 mündet. Die Entnahmestelle 29 an der Oberfläche 31 der Flüssigkeit im dritten Speicher 25 kann zum Beispiel über einen Schwimmer realisiert werden, der auf der Flüssigkeit schwimmt.

Der zweite Speicher 23 und der dritte Speicher 25 sind zusätzlich über eine Gasleitung 33 miteinander verbunden. Die Gasleitung 33 mündet dabei jeweils im oberen Bereich des zweiten Speichers 23 und des dritten Speichers 25. Auf diese Weise werden die Gas enthaltenden Bereiche des zweiten Speichers 23 und des dritten Speichers 25, die sich jeweils oberhalb der Flüssigkeit befinden, miteinander verbunden. Die Gasleitung mündet dabei besonders bevorzugt, wie hier dargestellt, am Deckel des zweiten Speichers 23 und des dritten Speichers 25.

In der Gasleitung 33 ist eine Fördervorrichtung mit umkehrbarer Förderrichtung 35 aufgenommen, mit der Gas entweder aus dem zweiten Speicher 23 in den dritten Speicher 25 oder umgekehrt aus dem dritten Speicher 25 in den zweiten Speicher 23 geleitet werden kann. Als Fördervorrichtung mit umkehrbarer Förderrichtung kann dabei jede beliebige, dem Fachmann bekannte Fördervorrichtung eingesetzt werden, die eine umkehrbare Förderrichtung ermöglicht. So ist es zum Beispiel möglich, einen Kompressor einzusetzen, dessen Förderrichtung umkehrbar ist. Alternativ ist es auch möglich, zwei Leitungen vorzusehen, wobei in jeder Leitung ein Kompressor aufgenommen ist und durch eine Leitung aus dem zweiten Speicher 23 in den dritten Speicher 25 gefördert wird und durch die zweite Leitung aus dem dritten Speicher 25 in den zweiten Speicher 23. Hierzu wird jeweils die Leitung freigegeben, die der Richtung entspricht, in die gefördert werden soll. Hierzu können zum Beispiel entsprechende Ventile einge-setzt werden.

Zum Laden der Vorrichtung zur Speicherung elektrischer Energie 21 wird mit Hilfe der Fördereinrichtung 35 Gas aus dem zweiten Speicher 23 über die Gasleitung 33 in den dritten Speicher 25 geleitet. Hierdurch entsteht ein Überdruck im dritten Speicher 25. Aufgrund des Überdrucks wird zunächst Schwefel, der eine obere flüssige Phase 37 bildet, in die Entnahmestelle 29 im dritten Speicher gedrückt und durch den Kathodenraum 11 der elektrochemischen Zellen 1 in den zweiten Speicher 23 geleitet. Sobald der Schwefel aus dem dritten Speicher 25 entnommen ist, liegt die Entnahmestelle 29 auf dem im dritten Speicher als untere flüssige Phase 39 enthaltenen Alkalimetallpolysulfid auf, so dass dieses über die Entnahmestelle 29 entnommen und durch den Kathodenraum 11 der elektrochemischen Zelle 1 geleitet wird. An der elektrochemischen Zelle ist eine Spannung angelegt, so dass ein Teil des Alkalimetallpolysulfids, das mit der Elektrode 13 in Kontakt kommt, zu Alkalimetall und Schwefel reagiert. Das Alkalimetall wird über den Festelektrolyten 3 in den Anodenraum 5 und von dort in den ersten Speicher 7 abgeführt und der entstandene Schwefel wird zusammen mit dem nicht umgesetzten Alkalimetallpolysulfid aus dem Kathodenraum 11 über die erste Leitung 17 in den zweiten Speicher 23 gedrückt. Im zweiten Speicher bilden sich somit eine obere flüssige Phase aus Schwefel und eine untere flüssige Phase aus Alkalimetallpolysulfid.

Sobald eine gewisse Menge Polysulfid aus dem dritten Speicher 25 herausbefördert worden ist, wird die Förderrichtung der Fördervorrichtung 35 mit umkehrbarer Förderrichtung umgekehrt. Gas wird jetzt aus dem dritten Speicher 25 in den zweiten Speicher 23 gefördert, so dass der Druck im zweiten Speicher 23 ansteigt und das im zweiten Speicher 23 enthaltene Polysulfid über die Entnahmestelle 27 unten am zweiten Speicher 23 entnommen und durch den Kathodenraum 11 zurück in den zweiten Speicher 23 geleitet wird. Die Förderung aus dem zweiten Speicher 23 in den dritten Speicher 25 wird beendet, sobald das gesamte Polysulfid aus dem zweiten Speicher 23 entnommen ist. Dieser Zeitpunkt wird durch geeignete Messeinrichtungen festgestellt, zum Beispiel durch Messung der thermischen oder elektrischen Leitfähigkeit, der Dichte oder der Viskosität der am Boden des zweiten Speichers 23 oder in der Leitung 17 befindlichen Flüssigkeit. Anschließend erfolgt wieder eine Umkehr der Förderrichtung des Gases.

Durch Einleitung des Gases aus dem zweiten Speicher 23 in den dritten Speicher 25 wird dann wieder das Polysulfid durch den Kathodenraum 11 geführt, wobei ein Teil des Polysulfids umgesetzt wird zu Alkalimetall und Schwefel.

Bei der Förderung des Polysulfids aus dem zweiten Speicher 23 in den dritten Speicher 25 ist es ebenfalls möglich, dass ein Teil des Polysulfids zu Schwefel und Alkalimetall umgesetzt wird. Der so erzeugte Schwefel verbleibt zunächst im Kathodenraum 11. Bei der erneuten Umkehr der Förderrichtung, bei der wieder Polysulfid aus dem dritten Speicher 25 durch die Leitung 19 in den Kathodenraum 11 geleitet wird, wird dieser Schwefel wieder in den zweiten Speicher 23 geleitet.

Die vorstehenden Schritte werden maximal so lange wiederholt, bis das gesamte Polysulfid zu Schwefel umgesetzt worden ist. Sobald das gesamte Polysulfid umgesetzt wurde, ist die Batterie geladen und die gespeicherte elektrische Energie kann genutzt werden. Hierzu werden in einem ersten Schritt die Reste an Polysulfid und dann der Schwefel aus dem zweiten Speicher 23 durch den Kathodenraum 11 in den dritten Speicher 25 geleitet, indem Gas aus dem dritten Speicher 25 in den zweiten Speicher 23 geleitet wird. Nachdem das noch im zweiten Speicher 23 enthaltene Polysulfid durch den Kathodenraum 11 geleitet wurde, gelangt der Schwefel in den Kathodenraum 11, wobei ein Teil des Schwefels mit dem Alkalimetall aus dem Anodenraum 5 zu Alkalimetallpolysulfid in der Elektrode 13 umgesetzt wird. Das entstandene Polysulfid sowie der nicht umgesetzte Schwefel werden über die zweite Leitung 19 in den dritten Speicher 25 geleitet. Nach einer gewissen Zeit, jedoch spätestens wenn der zweite Speicher 23 entleert ist, erfolgt eine Umkehr der Förderrichtung an der Fördervorrichtung 35, so dass das Gas aus dem zweiten Speicher 23 in den dritten Speicher 25 geleitet wird. Dies führt dazu, dass der Schwefel aus dem dritten Speicher 25 in den zweiten Speicher 23 geleitet wird. Sobald der Schwefel aus dem dritten Speicher 25 entnommen wurde und hier nur noch Polysulfid enthalten ist, wird die Förderrichtung des Gases erneut umgekehrt und der Prozess startet von neuem. Dieser Zeitpunkt wird durch geeignete Messeinrichtungen festgestellt, beispielsweise durch Messung der thermischen oder elektrischen Leitfähigkeit, der Dichte oder Viskosität der in der Entnahmevorrichtung 29 am dritten Speicher 25 oder in der Leitung 19 befindlichen Flüssigkeit. Dies wird so lange wiederholt, bis der gesamte Schwefel umgesetzt ist und damit die Vorrichtung entladen ist.

Auch hier ist es möglich, dass bei der Rückleitung des Schwefels Schwefel im Kathodenraum 11 zu Alkalimetallpolysulfid umgesetzt wird. In diesem Fall verbleibt das gebildete Polysulfid im Kathodenraum 11. Bei der erneuten Umkehr der Förderrichtung, bei der Schwefel aus dem zweiten Speicher 23 in den Kathodenraum 11 geleitet wird, fließt zunächst das im Kathodenraum 11 enthaltene Polysulfid in den dritten Speicher 25.

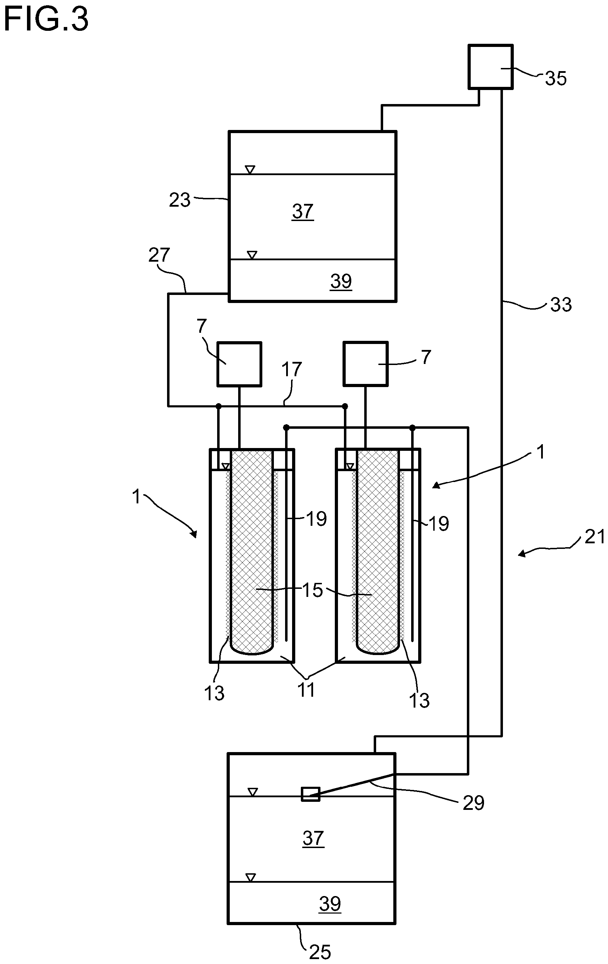

Ein alternativer Aufbau für eine Vorrichtung zur Speicherung elektrischer Energie, die auf die gleiche Weise betrieben wird, wie die in Figur 2 dargestellte Vorrichtung, ist in Figur 3 gezeigt.

Die in Figur 3 dargestellte Ausführungsform unterscheidet sich von der in Figur 2 gezeigten durch die Lage des zweiten Speichers 23 und des dritten Speichers 25.

Bei der in Figur 3 dargestellten Ausführungsform ist der zweite Speicher 23 oberhalb der elektrochemischen Zellen 1 und der dritte Speicher 25 unterhalb der elektrochemischen Zellen 1 positioniert. Dies hat den Vorteil, dass auch bei Energieausfall eine weitgehende Entleerung der elektrochemischen Zellen möglich ist. Der Inhalt der elektrochemischen Zellen 1 kann allein aufgrund der Schwerkraft in den dritten Speicher 25 ablaufen. Auf diese Weise kann vermieden werden, dass Schwefel oder Polysulfid in der elektrochemischen Zelle nach Abschaltung erstarrt und die Elektrode 13 oder insbesondere den Festelektrolyten 3 schädigen kann.

Bei der in Figur 3 dargestellten Ausführungsform ist jedoch aufgrund der Position des zweiten Speichers 23 ein höherer Gasdruck als in der in Figur 2 dargestellten Ausführungsform erforderlich, um den Inhalt des dritten Speichers 25 zurück in den zweiten Speicher 23 zu führen.

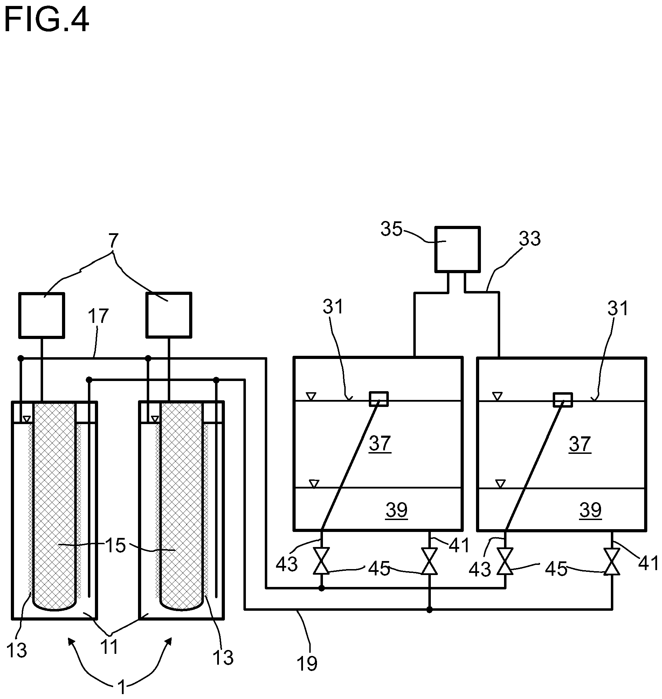

Figur 4 zeigt eine Vorrichtung zur Speicherung elektrischer Energie in einer dritten Ausführungsform.

Die in Figur 4 dargestellte Ausführungsform unterscheidet sich von der in Figur 2 dargestellten durch die Anordnung der Entnahmestellen am zweiten Speicher 23 und dritten Speicher 25 sowie die mit den jeweiligen Entnahmestellen verbundenen Leitungen 17, 19 über die der zweite Speicher 23 und dritte Speicher 25 mit dem Kathodenraum 11 verbunden sind.

Bei der in Figur 4 dargestellten Ausführungsform weisen sowohl der zweite Speicher 23 als auch der dritte Speicher 25 eine Entnahmestelle 41 im unteren Bereich auf, wobei die Entnahmestellen 41 jeweils mit der zweiten Leitung 19 verbunden sind, die im unteren Bereich des Kathodenraums 11 endet. Weiterhin weisen der zweite Speicher 23 und der dritte Speicher 25 jeweils eine Entnahmestelle 43 auf, die an der Oberfläche der Flüssigkeit im jeweiligen Speicher 23, 25 angeordnet ist. Die Entnahmestellen 43, die an der Oberfläche der Flüssigkeit im jeweiligen Speicher 23, 25 angeordnet sind, sind jeweils mit der ersten Leitung 17 verbunden, die im oberen Bereich des Kathodenraums 11 endet.

Sowohl die Entnahmestellen 41, die im unteren Bereich der Speicher 23, 25 angeordnet sind als auch die Entnahmestellen 43, die an der Oberfläche der Flüssigkeit in den Speichern 23, 25 angeordnet sind, können mit geeigneten Schließelementen 45 verschlossen werden. Hierbei können als Schließelement 45 zum Beispiel Schieber, Drehkugelventile oder andere dem Fachmann bekannte Vorrichtungen eingesetzt werden.

Nach dem Entladen oder bei Inbetriebnahme der Vorrichtung, wie sie in Figur 4 dargestellt ist, befindet sich Alkalimetallpolysulfid im zweiten Speicher 23 und der dritte Speicher 25 ist leer. Es ist allerdings auch möglich, dass sich in beiden Speichern 23, 25 jeweils Polysulfid befindet. Zum Laden wird das Alkalimetallpolysulfid über die Entnahmeleitung 41 aus dem zweiten Speicher 23 entnommen und über die zweite Leitung 19 in den Kathodenraum 11 geleitet. Im Kathodenraum 11 wird ein Teil des Alkalimetallpolysulfids an der Elektrode 13 zu Schwefel und Alkalimetall umgesetzt und das Alkalimetall wird über den Festelektrolyten 3 in den Anodenraum 5 transportiert. Da immer weiter Alkalimetall in den Anodenraum 5 gelangt, steigt hier der Druck und das Alkalimetall wird hierdurch in den Speicher 7 transportiert.

Der Schwefel und das nicht umgesetzte Polysulfid wird über die erste Leitung 17 oben aus dem Kathodenraum 11 entnommen und in den dritten Speicher 25 eingeleitet. Hierzu ist am zweiten Speicher 23, aus dem das Polysulfid entnommen wird, das Schließelement an der Entnahmestelle 41 unten am Speicher geöffnet und das Schließelement an der Entnahmestelle 43, die an der Oberfläche der Flüssigkeit angeordnet ist, geschlossen. Entsprechend ist am dritten Speicher 25, in den der Schwefel und das nicht umgesetzte Polysulfid eingeleitet werden, das Schließelement 45 an der Entnahmestelle 41, die unten am Speicher angeordnet ist, geschlossen und das Schließelement 45 an der Entnahmestelle, die an der Oberfläche der Flüssigkeit angeordnet ist, geöffnet. Um das Polysulfid aus dem zweiten Speicher 23 zu entnehmen, wird auch in der hier dargestellten Ausführungsform Gas aus dem dritten Speicher 25 über die Gasleitung 33 in den zweiten Speicher 23 eingeleitet, so dass der Druck im zweiten Speicher 23 ansteigt und das Polysulfid aus dem Speicher über die Entnahmestelle 41 herausgedrückt wird.

Bei Erreichen einer vorgegebenen Menge oder wenn das gesamte Polysulfid entnommen wurde, das heißt die Phasengrenze zwischen Polysulfid und Schwefel die Entnahmestelle 41 erreicht hat, werden die Schließelemente an der Entnahmeleitung 41 des zweiten Speichers 23 und an der Entnahmeleitung 43 am dritten Speicher 25 geschlossen und jeweils das andere Schließelement 45 geöffnet, so dass nun aus dem dritten Speicher 25, in den zuvor der Schwefel und das nicht umgesetzte Polysulfid eingeleitet wurden, das Polysulfid entnommen werden kann und nach Durchströmen des Kathodenraums 11 der entstandene Schwefel und das nicht umgesetzte Polysulfid in den zweiten Speicher 23 eingeleitet werden kann. Für den entsprechenden Transport wird gleichzeitig die Förderrichtung des Förderelements 35 mit umkehrbarer Förderrichtung umgekehrt, so dass Gas aus dem zweiten Speicher 23 in den dritten Speicher 25 eingeleitet wird, um den druckgetriebenen Flüssigkeitstransport zu realisieren. Nach Erreichen einer vorgegebenen Menge wird die Förderrichtung erneut umgekehrt und die jeweiligen Schließelemente, die geöffnet waren, geschlossen und die Schließelemente, die geschlossen waren, geöffnet. Dieser Prozess wird maximal so lange wiederholt, bis das gesamte Polysulfid zu Schwefel umgesetzt worden ist.

Das Entladen der Vorrichtung zur Nutzung der elektrischen Energie erfolgt analog dem Ladevorgang mit dem Unterschied, dass zur Entnahme des Schwefels das Schließelement 45 an der Entnahmestelle 43, die an der Oberfläche der Flüssigkeit angeordnet ist, geöffnet wird und zur Einleitung des Polysulfids und des nicht umgesetzten Schwefels in den Speicher das Schließelement 45 an der Entnahmestelle 41 unten am Speicher geöffnet ist und das Schließelement 45 an der Entnahmestelle 43 an der Oberfläche der Flüssigkeit geschlossen ist. Nach Erreichen einer vorgegebenen Zeit oder einer vorgegebenen entnommenen Menge an Schwefel oder wenn der gesamte Schwefel entnommen wurde, erfolgt die Umkehrung der Förderrichtung.

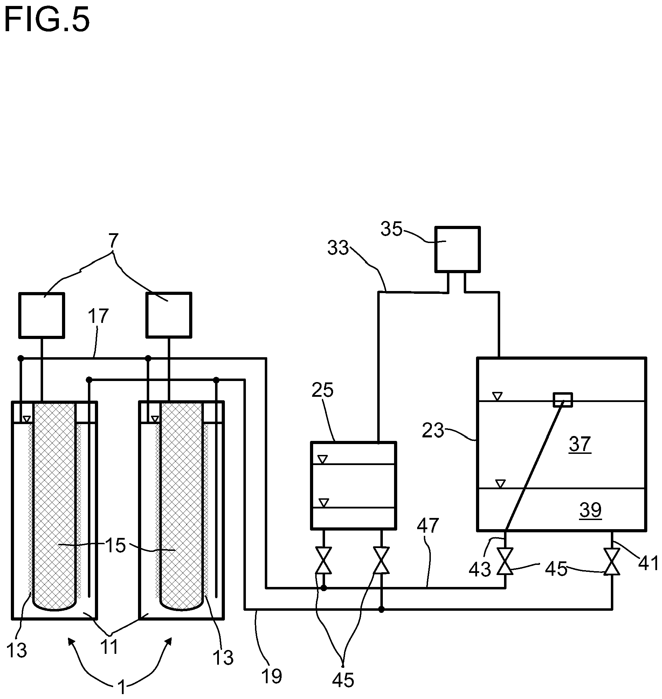

Eine weitere Ausführungsform für eine Vorrichtung zur Speicherung elektrischer Energie ist in Figur 5 dargestellt.

Im Unterschied zu der in Figur 4 dargestellten Ausführungsform ist hier der zweite Speicher 23 ein großer Speicher und der dritte Speicher 25 ein kleiner Zwischenspeicher. Der dritte Speicher 25 ist über eine direkte Leitung 47 mit dem zweiten Speicher 23 verbunden. Im Unterschied zum Betrieb der in Figur 4 dargestellten Ausführungsform wird hier nach Erreichen der Menge, bei der die Förderrichtung umgekehrt wird, der gesamte Inhalt aus dem dritten Speicher 25 über die direkte Leitung 47 in den zweiten Speicher 23 zurückgeleitet. Eine entsprechende Durchführung des Verfahrens, bei dem die Flüssigkeit aus dem dritten Speicher 25 in den zweiten Speicher 23 über eine direkte Leitung zurückgeführt wird, ist auch mit der in Figur 4 dargestellten Ausführungsform mit gleich großen Speichern möglich.

In allen Ausführungsformen ist die zweite Leitung 19, die im unteren Bereich des Kathodenraums endet, zum Beispiel als Tauchrohr gestaltet, das in den Kathodenraum 11hineinragt. Alternativ ist es selbstverständlich auch möglich, die zweite Leitung 19 von unten über einen geeigneten Anschluss am Kathodenraum anzuschließen. Bevorzugt ist die zweite Leitung jedoch, wie hier dargestellt, ein Tauchrohr.

In allen Ausführungsformen erfolgt der Transport der Flüssigkeit, das heißt des Schwefels und des Polysulfids, indem Gas aus dem Speicher, in den die Flüssigkeit eingeleitet wird, entnommen und über die Gasleitung 33 in den Speicher eingeleitet wird, aus dem die Flüssigkeit entnommen wird. Hierdurch ist es möglich, den Transport von Schwefel und Polysulfid zu realisieren, ohne dass ein Förderaggregat, beispielsweise eine Pumpe, mit Schwefel oder Polysulfid in Kontakt kommt.

Um zu verhindern, dass Schwefeldämpfe, die im Gas enthalten sind, die Fördervorrichtung 35 mit umkehrbarer Förderrichtung schädigen, ist es bevorzugt, hier nicht dargestellte Kondensatabscheider vorzusehen. Im Kondensatabscheider wird das Gas abgekühlt, damit der Schwefel auskondensiert. Der auskondensierte Schwefel kann dann aus dem Gas entfernt werden, so dass die Fördervorrichtung 35 nicht mit Schwefel in Kontakt kommt.

Um die elektrochemischen Zellen 1 zu temperieren, ist die Strömungsgeschwindigkeit, mit der das Polysulfid beziehungsweise der Schwefel durch den Kathodenraum 11 geleitet wird, so groß, dass nur ein Teil des Schwefels beim Entladen oder ein Teil des Polysulfids beim Laden umgesetzt wird. Die Strömungsgeschwindigkeit wird dabei vorzugsweise so groß gewählt, dass die Temperatur des Polysulfids beziehungsweise des Schwefels beim Einleiten in den Kathodenraum 11 weniger als 40°C, bevorzugt weniger als 10°C, von der Temperatur abweicht, die der Schwefel und das nicht umgesetzte Polysulfid beziehungsweise das Polysulfid und der nicht umgesetzte Schwefel bei der Entnahme aus dem Kathodenraum 11 aufweisen. Um hierbei bei mehrfachem Durchlaufen durch den Kathodenraum 11 die Temperatur in der elektrochemischen Zelle 1 konstant zu halten, werden der zweite Speicher 23 und der dritte Speicher 25 vorzugsweise temperiert.

Weiterhin ist es bevorzugt, wenn alle Bauteile bis auf die Fördervorrichtung 35 für das Gas von einer Isolierung, die hier in den Figuren nicht dargestellt ist, umschlossen sind. Hierbei können die Bauteile jeweils separat mit einer Isolierung versehen werden oder es wird eine gemeinsame Isolierung für alle Bauteile genutzt. Hierbei ist es weiterhin möglich, dass die gesamte Vorrichtung zur Speicherung elektrischer Energie in einem Überbehälter aufgenommen ist und der Überbehälter mit der Isolierung versehen wird.

### Bezugszeichenliste

- 1: elektrochemische Zelle
- 3: Festelektrolyt
- 5: Anodenraum
- 7: erster Speicher
- 9: Gehäuse
- 11: Kathodenraum
- 13: poröse Elektrode
- 15: Verdränger
- 17: erste Leitung
- 19: zweite Leitung
- 21: Vorrichtung zur Speicherung elektrischer Energie
- 23: zweiter Speicher
- 25: dritter Speicher
- 27: Entnahmestelle unten am zweiten Speicher 23
- 29: Entnahmestelle im dritten Speicher 25
- 31: Oberfläche der Flüssigkeit im dritten Speicher 25
- 33: Gasleitung
- 35: Fördervorrichtung mit umkehrbarer Förderrichtung
- 37: obere flüssige Phase
- 39: untere flüssige Phase
- 41: Entnahmestelle unten am Speicher
- 43: Entnahmestelle an der Oberfläche der Flüssigkeit
- 45: Schließelement
- 47: direkte Leitung

## Patentansprüche

1. Vorrichtung zur Speicherung elektrischer Energie, umfassend mindestens eine elektrochemische Zelle (1) mit einem Anodenraum (5) und einem Kathodenraum (11), die durch einen Festelektrolyten (3) getrennt sind, sowie einen ersten Speicher (7) für Anodenmaterial, der mit dem Anodenraum (5) verbunden ist und einen zweiten Speicher (23) für Kathodenmaterial, der mit dem Kathodenraum (11) verbunden ist, **dadurch gekennzeichnet, dass** das Anodenmaterial, das Kathodenmaterial und im Kathodenraum entstehendes Reaktionsprodukt bei Betriebstemperatur flüssig sind und Kathodenmaterial und Reaktionsprodukt zwei nicht mischbare Phasen unterschiedlicher Dichte bilden und der Kathodenraum (11) weiterhin mit einem dritten Speicher (25) verbunden ist, der zweite Speicher (23) und der dritte Speicher (25) über eine Gasleitung (33) miteinander verbunden sind, wobei die Gasleitung (33) jeweils im oberen Bereich des zweiten Speichers (23) und des dritten Speichers (25) mündet und eine Fördervorrichtung (35) für Gas mit umkehrbarer Förderrichtung in der Gasleitung (33) aufgenommen ist, und wobei weiterhin
(i) der zweite Speicher (23) eine Entnahmestelle (27) im unteren Bereich des Speichers (23) aufweist, die mit einer Leitung (17) verbunden ist, die im oberen Bereich des Kathodenraums (11) mündet und der dritte Speicher (25) eine Entnahmestelle (29) an der Oberfläche (31) der im dritten Speicher (25) enthaltenen Flüssigkeit aufweist, die mit einer Leitung (19) verbunden ist, die im unteren Bereich des Kathodenraums (11) mündet,
oder
(ii) der zweite Speicher (23) und der dritte Speicher (25) jeweils eine Entnahmestelle (41) im unteren Bereich des Speichers aufweisen, die mit einer Leitung (19) verbunden sind, die im unteren Bereich des Kathodenraums (11) mündet, und jeweils eine Entnahmestelle (43) an der Oberfläche (31) der im Speicher (23, 25) enthaltenen Flüssigkeit aufweisen, die mit einer Leitung (17) verbunden sind, die im oberen Bereich des Kathodenraums (11) mündet.

2. Vorrichtung gemäß Anspruch 1, **dadurch gekennzeichnet, dass** der zweite Speicher (23) oberhalb der elektrochemischen Zelle (1) und der dritte Speicher (25) unterhalb der elektrochemischen Zelle (1) positioniert ist.

3. Vorrichtung gemäß Anspruch 1 oder 2, **dadurch gekennzeichnet, dass** die Fördervorrichtung (35) für das Gas mit umkehrbarer Förderrichtung eine Kompressoreneinheit mit umkehrbarer Strömungsrichtung ist.

4. Vorrichtung gemäß einem der Ansprüche 1 bis 3, **dadurch gekennzeichnet, dass** zwischen dem zweiten Speicher (23) und der Fördervorrichtung (35) für Gas und/oder zwischen dem dritten Speicher (25) und der Fördervorrichtung (35) für Gas ein Kondensatabscheider positioniert ist.

5. Vorrichtung gemäß einem der Ansprüche 1, 3 oder 4, **dadurch gekennzeichnet, dass** der zweite Speicher (23) und der dritte Speicher (25) jeweils eine Entnahmestelle (41) im unteren Bereich des Speichers (23, 25) aufweisen, die mit einer Leitung (19) verbunden sind, die im unteren Bereich des Kathodenraums (11) mündet, und jeweils eine Entnahmestelle (43) an der Oberfläche (31) der im Speicher (23, 25) enthaltenen Flüssigkeit aufweisen, die mit einer Leitung (17) verbunden sind, die im oberen Bereich des Kathodenraums (11) mündet, und der zweite Speicher (23) und dritte Speicher (25) so miteinander verbunden sind, dass Flüssigkeit aus dem zweiten Speicher (23) direkt in den dritten Speicher (25) geleitet werden kann.

6. Vorrichtung gemäß einem der Ansprüche 1 bis 5, **dadurch gekennzeichnet, dass** der zweite Speicher (23) oder der dritte Speicher (25) oder der zweite Speicher (23) und der dritte Speicher (25) jeweils eine Vorrichtung zur Temperaturregelung umfassen.

7. Verfahren zum Betrieb einer Vorrichtung zur Speicherung elektrischer Energie (1) gemäß einem der Ansprüche 1 bis 4, wobei als Anodenmaterial ein geschmolzenes Alkalimetall und als Kathodenmaterial Schwefel eingesetzt wird, folgende Schritte umfassend:
(a) Durchströmen des Kathodenraums (11) mit Alkalimetallpolysulfid zum Laden der Vorrichtung zur Speicherung elektrischer Energie (1) oder mit Schwefel zum Entladen der Vorrichtung zur Speicherung elektrischer Energie (1), wobei das Alkalimetallpolysulfid aus dem dritten Speicher (25) von unten in den Kathodenraum (11) eingeleitet wird, den Kathodenraum (11) von unten nach oben durchströmt, wobei ein Teil des Alkalimetallpolysulfids zu Schwefel umgesetzt wird und das Alkalimetallpolysulfid und der Schwefel oben aus dem Kathodenraum (11) entnommen und in den zweiten Speicher (23) eingeleitet werden, oder der Schwefel aus dem zweiten Speicher (23) von oben in den Kathodenraum (11) eingeleitet wird, den Kathodenraum (11) von oben nach unten durchströmt, wobei ein Teil des Schwefels zu Alkalimetallpolysulfid umgesetzt wird und der Schwefel und das Alkalimetallpolysulfid am unteren Bereich des Kathodenraums (11) entnommen und in den dritten Speicher (25) eingeleitet werden,
(b) Umkehr der Strömungsrichtung und Zurückleiten des Alkalimetallpolysulfids aus dem zweiten Speicher (23) in den dritten Speicher (25) beim Ladeprozess und Zurückleiten des Schwefels aus dem dritten Speicher (25) in den zweiten Speicher (23) beim Entladeprozess,
(c) Wiederholen der Schritte (a) und (b).

8. Verfahren gemäß Anspruch 7, **dadurch gekennzeichnet, dass** jeweils vor Durchführung des Schrittes (a) beim Laden der Vorrichtung der Schwefel aus dem dritten Speicher (25) durch den Kathodenraum (11) in den zweiten Speicher (23) und beim Entladen der Vorrichtung das Alkalimetallpolysulfid aus dem zweiten Speicher (23) durch den Kathodenraum (11) in den dritten Speicher (25) jeweils mit einer Geschwindigkeit geleitet werden, die höher ist als die Geschwindigkeit mit der das Alkalimetallpolysulfid während des Ladens und der Schwefel während des Entladens durch den Kathodenraum (11) geleitet werden.

9. Verfahren zum Betrieb einer Vorrichtung zur Speicherung elektrischer Energie gemäß Anspruch 5, wobei als Anodenmaterial ein geschmolzenes Alkalimetall und als Kathodenmaterial Schwefel eingesetzt wird, folgende Schritte umfassend:
(i) Durchströmen des Kathodenraums (11) mit Alkalimetallpolysulfid zum Laden der Vorrichtung zur Speicherung elektrischer Energie oder mit Schwefel zum Entladen der Vorrichtung zur Speicherung elektrischer Energie, wobei das Alkalimetallpolysulfid oder der Schwefel aus dem zweiten Speicher (23) in den dritten Speicher (25) strömt und wobei beim Durchströmen durch den Kathodenraum (11) beim Entladen ein Teil des Schwefels zu Alkalimetallpolysulfid umgesetzt wird und beim Laden ein Teil des Alkalimetallpolysulfids zu Schwefel, so dass nach dem Durchströmen des Kathodenraums (11) im dritten Speicher (25) eine obere flüssige Phase (37) aus Schwefel und eine untere flüssige Phase (39) aus Alkalimetallpolysulfid enthalten ist;
(ii) Umkehr der Strömungsrichtung, nachdem zumindest ein Teil des Schwefels oder zumindest ein Teil des Alkalimetallpolysulfids aus dem zweiten Speicher (23) entnommen worden ist;
(iii) Durchströmen des Kathodenraums (11) mit Alkalimetallpolysulfid zum Laden der Vorrichtung zur Speicherung elektrischer Energie oder mit Schwefel zum Entladen der Vorrichtung zur Speicherung elektrischer Energie, wobei das Alkalimetallpolysulfid oder der Schwefel aus dem dritten Speicher (25) in den zweiten Speicher (23) strömt und wobei beim Durchströmen durch den Kathodenraum (11) beim Entladen ein Teil des Schwefels zu Alkalimetallpolysulfid umgesetzt wird und beim Laden ein Teil des Alkalimetallpolysulfids zu Schwefel, so dass nach dem Durchströmen des Kathodenraums (11) im zweiten Speicher (23) eine obere flüssige Phase (37) aus Schwefel und eine untere flüssige Phase (39) aus Alkalimetallpolysulfid enthalten ist, oder direktes Zurückleiten des Inhalts des dritten Speichers (25) in den zweiten Speicher (23);
(iv) Umkehr der Strömungsrichtung, nachdem zumindest ein Teil des Schwefels oder ein Teil des Alkalimetallpolysulfids aus dem dritten Speicher (25) entnommen worden ist;
(v) Wiederholen der Schritte (i) bis (iv),
wobei das Alkalimetallpolysulfid beim Laden so zugeführt wird, dass dieses von unten nach oben durch den Kathodenraum (11) fließt und der Schwefel beim Entladen so zugeführt wird, dass dieser von oben nach unten durch den Kathodenraum (11) fließt.

10. Verfahren gemäß einem der Ansprüche 7 bis 9, **dadurch gekennzeichnet, dass** die Förderung des Schwefels oder des Alkalimetallpolysulfids durch Förderung des Gases aus dem Speicher (23, 25), der befüllt wird, in den Speicher (25, 23), der entleert wird, erfolgt.

11. Verfahren gemäß einem der Ansprüche 7 bis 10, **dadurch gekennzeichnet, dass** die Strömungsgeschwindigkeit des Alkalimetallpolysulfids oder des Schwefels so eingestellt wird, dass der Betrag der Temperaturänderung des Alkalimetalls oder des Schwefels beim Durchströmen des Kathodenraums (11) bei regulärem Betrieb der Zellen weniger als 40°C beträgt.

12. Verfahren gemäß einem der Ansprüche 7 bis 11, **dadurch gekennzeichnet, dass** das Alkalimetall Natrium ist.

## Claims

1. An apparatus for storing electric energy, which comprises at least one electrochemical cell (1) having an anode space (5) and a cathode space (11), which are separated by a solid electrolyte (3), and also a first store (7) for anode material which is connected to the anode space (5) and a second store (23) for cathode material which is connected to the cathode space (11), wherein the anode material, the cathode material and a reaction product formed in the cathode space are liquid at the operating temperature, and cathode material and reaction product form two immiscible phases having different densities, and the cathode space (11) is also connected to a third store (25), and the second store (23) and the third store (25) are connected to one another by means of a gas conduit (33), where the gas conduit (33) opens in each case into the upper region of the second store (23) and of the third store (25) and a conveying apparatus (35) for gas having a reversible conveying direction is accommodated in the gas conduit (33), and, furthermore,
(i) the second store (23) has an offtake point (27) in the lower region of the store (23), which offtake point is connected to a conduit (17) which opens into the upper region of the cathode space (11), and the third store (25) has an offtake point (29) at the surface (31) of the liquid comprised in the third store (25), which offtake point is connected to a conduit (19) which opens into the lower region of the cathode space (11),
or
(ii) the second store (23) and the third store (25) each have an offtake point (41) in the lower region of the store, which offtake points are connected to a conduit (19) which opens into the lower region of the cathode space (11), and each have an offtake point (43) at the surface (31) of the liquid comprised in the store (23, 25), which offtake points are connected to a conduit (17) which opens into the upper region of the cathode space (11).

2. The apparatus according to claim 1, wherein the second store (23) is positioned above the electrochemical cell (1) and the third store (25) is positioned below the electrochemical cell (1).

3. The apparatus according to claim 1 or 2, wherein the conveying apparatus (35) for the gas having a reversible conveying direction is a compressor unit having a reversible flow direction.

4. The apparatus according to any of claims 1 to 3, wherein a condensate separator is positioned between the second store (23) and the conveying apparatus (35) for gas and/or between the third store (25) and the conveying apparatus (35) for gas.

5. The apparatus according to any of claims 1, 3 or 4, wherein the second store (23) and the third store (25) each have an offtake point (41) in the lower region of the store (23, 25), which offtake points are connected to a conduit (19) which opens into the lower region of the cathode space (11), and each have an offtake point (43) at the surface (31) of the liquid comprised in the store (23, 25), which offtake points are connected to a conduit (17) which opens into the upper region of the cathode space (11), and the second store (23) and third store (25) are connected to one another in such a way that liquid from the second store (23) can be conveyed directly into the third store (25) .

6. The apparatus according to any of claims 1 to 5, wherein the second store (23) or the third store (25) or the second store (23) and the third store (25) each comprise an apparatus for regulating the temperature.

7. A method of operating an apparatus for storing electric energy (1) according to any of claims 1 to 4, where a molten alkali metal is used as anode material and sulfur is used as cathode material, which comprises the following steps:
(a) passing alkali metal polysulfide through the cathode space (11) in order to charge the apparatus for storing electric energy (1) or passing sulfur through the cathode space (11) in order to discharge the apparatus for storing electric energy (1), where the alkali metal polysulfide from the third store (25) is introduced from below into the cathode space (11) and flows through the cathode space (11) from the bottom upward, where part of the alkali metal polysulfide is converted into sulfur and the alkali metal polysulfide and the sulfur are taken off at the top of the cathode space (11) and are introduced into the second store (23), or the sulfur from the second store (23) is introduced from the top into the cathode space (11) and flows through the cathode space (11) from the top downward, where part of the sulfur is converted into alkali metal polysulfide and the sulfur and the alkali metal polysulfide are taken off in the lower region of the cathode space (11) and are introduced into the third store (25),
(b) reversing the flow direction and conveying the alkali metal polysulfide from the second store (23) back into the third store (25) during the charging process and conveying the sulfur from the third store (25) back into the second store (23) during the discharging process,
(c) repeating the steps (a) and (b).

8. The method according to claim 7, wherein, in each case before carrying out step (a), the sulfur from the third store (25) is conveyed through the cathode space (11) into the second store (23) during charging of the apparatus and the alkali metal polysulfide from the second store (23) is conveyed through the cathode space (11) into the third store (25) during discharging of the apparatus, in each case at a rate which is greater than the rate at which the alkali metal polysulfide is conveyed through the cathode space (11) during charging and the sulfur is conveyed through the cathode space (11) during discharging.

9. A method of operating an apparatus for storing electric energy according to claim 5, where a molten alkali metal is used as anode material and sulfur is used as cathode material, which comprises the following steps:
(i) passing alkali metal polysulfide through the cathode space (11) in order to charge the apparatus for storing electric energy or passing sulfur through the cathode space (11) in order to discharge the apparatus for storing electric energy, where the alkali metal polysulfide or the sulfur flows from the second store (23) into the third store (25) and part of the sulfur is converted into alkali metal polysulfide during passage through the cathode space (11) during discharging and part of the alkali metal polysulfide is converted into sulfur during passage through the cathode space (11) during charging, so that an upper liquid phase (37) composed of sulfur and a lower liquid phase (39) composed of alkali metal polysulfide are comprised in the third store (25) after passage through the cathode space (11);
(ii) reversing the flow direction after at least part of the sulfur or at least part of the alkali metal polysulfide has been taken off from the second store (23) ;
(iii) passing alkali metal polysulfide through the cathode space (11) in order to charge the apparatus for storing electric energy or passing sulfur through the cathode space (11) in order to discharge the apparatus for storing electric energy, where the alkali metal polysulfide or the sulfur flows from the third store (25) into the second store (23) and part of the sulfur is converted into alkali metal polysulfide during passage through the cathode space (11) during discharging and part of the alkali metal polysulfide is converted into sulfur during passage through the cathode space (11) during charging, so that an upper liquid phase (37) composed of sulfur and a lower liquid phase (39) composed of alkali metal polysulfide are comprised in the second store (23) after passage through the cathode space (11), or direct conveying of the contents of the third store (25) back into the second store (23);
(iv) reversing the flow direction after at least part of the sulfur or part of the alkali metal polysulfide has been taken off from the third store (25);
(v) repeating the steps (i) to (iv),
where the alkali metal polysulfide is introduced in such a way that it flows from the bottom upward through the cathode space (11) during charging and the sulfur is introduced in such a way that it flows from the top downward through the cathode space (11) during discharging.

10. The method according to any of claims 7 to 9, wherein the conveying of the sulfur or of the alkali metal polysulfide is effected by conveying the gas from the store (23, 25) which is being filled into the store (25, 23) which is being emptied.

11. The method according to any of claims 7 to 10, wherein the flow rate of the alkali metal polysulfide or of the sulfur is set so that the absolute value of the temperature change of the alkali metal or of the sulfur during passage through the cathode space (11) is less than 40°C during normal operation of the cells.

12. The method according to any of claims 7 to 11, wherein the alkali metal is sodium.

## Revendications

1. Dispositif pour le stockage d'énergie électrique, comprenant au moins une cellule électrochimique (1) munie d'un compartiment anodique (5) et d'un compartiment cathodique (11), qui sont séparés par un électrolyte solide (3), ainsi qu'un premier accumulateur (7) pour matériau d'anode, qui est raccordé avec le compartiment anodique (5), et un deuxième accumulateur (23) pour matériau de cathode, qui est raccordé avec le compartiment cathodique (11), **caractérisé en ce que** le matériau d'anode, le matériau de cathode et le produit de réaction formé dans le compartiment cathodique sont liquides à la température d'exploitation, et le matériau de cathode et le produit de réaction forment deux phases non miscibles de densité différente, et le compartiment cathodique (11) est en outre raccordé avec un troisième accumulateur (25), le deuxième accumulateur (23) et le troisième accumulateur (25) sont raccordés l'un avec l'autre par une conduite de gaz (33), la conduite de gaz (33) débouchant respectivement dans la zone supérieure du deuxième accumulateur (23) et du troisième accumulateur (25), et un dispositif de transport (35) pour du gaz à direction de transport réversible étant logé dans la conduite de gaz (33), et en outre
(i) le deuxième accumulateur (23) comprenant un point de soutirage (27) dans la zone inférieure de l'accumulateur (23), qui est raccordé avec une conduite (17), qui débouche dans la zone supérieure du compartiment cathodique (11), et le troisième accumulateur (25) comprenant un point de soutirage (29) à la surface (31) du liquide contenu dans le troisième accumulateur (25), qui est raccordé avec une conduite (19), qui débouche dans la zone inférieure du compartiment cathodique (11),
ou
(ii) le deuxième accumulateur (23) et le troisième accumulateur (25) comprenant chacun un point de soutirage (41) dans la zone inférieure de l'accumulateur, qui sont raccordés avec une conduite (19), qui débouche dans la zone inférieure du compartiment cathodique (11), et comprenant chacun un point de soutirage (43) à la surface (31) du liquide contenu dans l'accumulateur (23, 25), qui sont raccordés avec une conduite (17), qui débouche dans la zone supérieure du compartiment cathodique (11).

2. Dispositif selon la revendication 1, **caractérisé en ce que** le deuxième accumulateur (23) est positionné au-dessus de la cellule électrochimique (1) et le troisième accumulateur (25) est positionné en dessous de la cellule électrochimique (1).

3. Dispositif selon la revendication 1 ou 2, **caractérisé en ce que** le dispositif de transport (35) pour le gaz à direction de transport réversible est une unité de compression à direction d'écoulement réversible.

4. Dispositif selon l'une quelconque des revendications 1 à 3, **caractérisé en ce qu'**un séparateur de condensat est positionné entre le deuxième accumulateur (23) et le dispositif de transport (35) pour du gaz et/ou entre le troisième accumulateur (25) et le dispositif de transport (35) pour du gaz.

5. Dispositif selon l'une quelconque des revendications 1, 3 ou 4, caractérisé en ce le deuxième accumulateur (23) et le troisième accumulateur (25) comprennent chacun un point de soutirage (41) dans la zone inférieure de l'accumulateur (23, 25), qui sont raccordés avec une conduite (19), qui débouche dans la zone inférieure du compartiment cathodique (11), et comprennent chacun un point de soutirage (43) à la surface (31) du liquide contenu dans l'accumulateur (23, 25), qui sont raccordés avec une conduite (17), qui débouche dans la zone supérieure du compartiment cathodique (11), et le deuxième accumulateur (23) et le troisième accumulateur (25) sont raccordés l'un avec l'autre de telle sorte que du liquide puisse être acheminé directement à partir du deuxième accumulateur (23) dans le troisième accumulateur (25).

6. Dispositif selon l'une quelconque des revendications 1 à 5, caractérisé en ce le deuxième accumulateur (23) ou le troisième accumulateur (25) ou le deuxième accumulateur (23) et le troisième accumulateur (25) comprennent chacun un dispositif pour l'ajustement de la température.

7. Procédé pour l'exploitation d'un dispositif pour le stockage d'énergie électrique (1) selon l'une quelconque des revendications 1 à 4, un métal alcalin fondu étant utilisé en tant que matériau d'anode et du soufre étant utilisé en tant que matériau de cathode, comprenant les étapes suivantes :
(a) la traversée du compartiment cathodique (11) avec du polysulfure de métal alcalin pour le chargement du dispositif pour le stockage d'énergie électrique (1) ou avec du soufre pour le déchargement du dispositif pour le stockage d'énergie électrique (1), le polysulfure de métal alcalin étant introduit à partir du troisième accumulateur (25) depuis le bas dans le compartiment cathodique (11), traversant le compartiment cathodique (11) du bas vers le haut, une partie du polysulfure de métal alcalin étant transformée en soufre, et le polysulfure de métal alcalin et le soufre étant soutirés du compartiment cathodique (11) par le haut et introduits dans le deuxième accumulateur (23), ou le soufre étant introduit à partir du deuxième accumulateur (23) depuis le haut dans le compartiment cathodique (11), traversant le compartiment cathodique (11) du haut vers le bas, une partie du soufre étant transformée en polysulfure de métal alcalin, et le soufre et le polysulfure de métal alcalin étant soutirés au niveau de la zone inférieure du compartiment cathodique (11) et introduits dans le troisième accumulateur (25),
(b) l'inversement de la direction d'écoulement et le renvoi du polysulfure de métal alcalin à partir du deuxième accumulateur (23) dans le troisième accumulateur (25) lors du processus de chargement, et le renvoi du soufre à partir du troisième accumulateur (25) dans le deuxième accumulateur (23) lors du processus de déchargement,
(c) la répétition des étapes (a) et (b).

8. Procédé selon la revendication 7, **caractérisé en ce qu'**avant la réalisation de l'étape (a), respectivement lors du chargement du dispositif le soufre est acheminé à partir du troisième accumulateur (25) au travers du compartiment cathodique (11) dans le deuxième accumulateur (23) et lors du déchargement du dispositif le polysulfure de métal alcali est acheminé à partir du deuxième accumulateur (23) au travers du compartiment cathodique (11) dans le troisième accumulateur (25) à chaque fois avec une vitesse qui est supérieure à la vitesse avec laquelle le polysulfure de métal alcalin pendant le chargement et le soufre pendant le déchargement sont acheminés au travers du compartiment cathodique (11).

9. Procédé d'exploitation d'un dispositif pour le stockage d'énergie électrique selon la revendication 5, un métal alcalin fondu étant utilisé en tant que matériau d'anode et du soufre étant utilisé en tant que matériau de cathode, comprenant les étapes suivantes :
(i) la traversée du compartiment cathodique (11) avec du polysulfure de métal alcalin pour le chargement du dispositif pour le stockage d'énergie électrique ou avec du soufre pour le déchargement du dispositif pour le stockage d'énergie électrique, le polysulfure de métal alcalin ou le soufre s'écoulant à partir du deuxième accumulateur (23) dans le troisième accumulateur (25) et, lors de la traversée du compartiment cathodique (11), lors du déchargement une partie du soufre étant transformée en polysulfure de métal alcalin, et lors du chargement une partie du polysulfure de métal alcalin étant transformée en soufre, de telle sorte qu'après la traversée du compartiment cathodique (11), une phase liquide supérieure (37) de soufre et une phase liquide inférieure (39) de polysulfure de métal alcalin soient contenues dans le troisième accumulateur (25) ;
(ii) l'inversement de la direction d'écoulement après qu'au moins une partie du soufre ou au moins une partie du polysulfure de métal alcalin ait été soutirée du deuxième accumulateur (23) ;
(iii) la traversée du compartiment cathodique (11) avec du polysulfure de métal alcalin pour le chargement du dispositif pour le stockage d'énergie électrique ou avec du soufre pour le déchargement du dispositif pour le stockage d'énergie électrique, le polysulfure de métal alcalin ou le soufre s'écoulant à partir du troisième accumulateur (25) dans le deuxième accumulateur (23) et, lors de la traversée du compartiment cathodique (11), lors du déchargement une partie du soufre étant transformée en polysulfure de métal alcalin, et lors du chargement une partie du polysulfure de métal alcalin étant transformée en soufre, de telle sorte qu'après la traversée du compartiment cathodique (11), une phase liquide supérieure (37) de soufre et une phase liquide inférieure (39) de polysulfure de métal alcalin soient contenues dans le deuxième accumulateur (23), ou le renvoi direct du contenu du troisième accumulateur (25) dans le deuxième accumulateur (23) ;
(iv) l'inversement de la direction d'écoulement après qu'au moins une partie du soufre ou une partie du polysulfure de métal alcalin ait été soutirée du troisième accumulateur (25) ;
(v) la répétition des étapes (i) à (iv),
le polysulfure de métal alcalin étant introduit lors du chargement de telle sorte que celui-ci traverse le compartiment cathodique (11) du bas vers le haut, et le soufre étant introduit lors du déchargement de telle sorte que celui-ci traverse le compartiment cathodique (11) du haut vers le bas.

10. Procédé selon l'une quelconque des revendications 7 à 9, **caractérisé en ce que** le transport du soufre ou du polysulfure de métal alcalin a lieu par transport du gaz à partir de l'accumulateur (23, 25), qui est rempli, vers l'accumulateur (25, 23), qui est vide.

11. Procédé selon l'une quelconque des revendications 7 à 10, **caractérisé en ce que** la vitesse d'écoulement du polysulfure de métal alcalin ou du soufre est ajustée de telle sorte que le montant de la modification de température du métal alcalin ou du soufre lors de la traversée du compartiment cathodique (11) lors de l'exploitation régulière des cellules soit inférieur à 40 °C.

12. Procédé selon l'une quelconque des revendications 7 à 11, **caractérisé en ce que** le métal alcalin est le sodium.
